# EUROPEAN PATENT APPLICATION

(11) **EP 0 601 693 A1**
(43) Date of publication of application: **15.06.1994**
(21) Application number: 93307439.5
(22) Date of filing: 20.09.1993
(51) Int. Cl.: B29C 47/00, B29C 47/04

(54) **A weatherstrip**

(30) Priority: 28.11.1992 GB 9224980
(71) Applicant: FORD MOTOR COMPANY LIMITED, Brentwood, Essex CM13 3BW (GB); FORD FRANCE S. A., F-92506 Rueil-Malmaison Cédex (FR); FORD-WERKE AKTIENGESELLSCHAFT, D-50735 Köln (DE)
(72) Inventor: Hyare, Avtar, Muswell Hill, London N10 3AG (GB)
(74) Representative: Messulam, Alec Moses

(57) **Abstract**

A weatherstrip for a motor vehicle has a natural rubber body 20, to form an effective seal both with the glass 12 and with the sheet metal bodywork 14, and an outer skin 36 of EPDM which is co-extruded with the natural rubber body 20 and provides protection for the natural rubber against environmental attack.

## Description

This invention relates to a weatherstrip for sealing a glass pane to the bodywork of a motor vehicle.

It has been proposed to make weatherstrips from a variety of different materials. Natural rubber is one such material. Whilst natural rubber provides a good seal, it can be readily damaged by the atmosphere, particularly by the ozone in the atmosphere, and this can lead to cracking of the rubber. This cracking is especially noticeable where a part of the rubber strip is put in tension, as happens when the strip is bent around a curve and the outer lip is stressed.

It is also known to make weatherstrips out of other materials and, by way of example, a weatherstrip formed from EPDM (ethylene-propylene-diene monomer) is disclosed in GB-A-2 123 339.

However EPDM has proved to be not completely satisfactory in forming a seal against flat surfaces.

According to the present invention there is provided a weatherstrip for sealing a glass panel to the bodywork of a motor vehicle, the weatherstrip being of uniform cross-sectional form over its length and being made partly of natural rubber and partly of a flexible synthetic material which is resistant to ozone cracking, the weatherstrip having features formed in the natural rubber region thereof for making a seal with the pane and with the bodywork, and having the synthetic material forming a cover over the natural rubber where the weatherstrip is, in use, exposed to the atmosphere.

The flexible synthetic material which is resistant to ozone cracking is preferably EPDM.

The rubber and the EPDM are preferably co-extruded to form the weatherstrip, with the weatherstrip being predominantly formed from natural rubber with a coating of EPDM on one surface.

In this way, a weatherstrip is formed which has excellent sealing properties and is resistant to ozone cracking. The EPDM cover preferably extends right to that edge of the weatherstrip which seals against the motor vehicle bodywork. At the opposite edge of the strip, which seals against the glass, the EPDM cover may stop some distance before the edge of the strip. The edge of the strip which seals against the glass will generally be in compression, rather than in tension, and will therefore be less susceptible to ozone cracking than the outer, tensioned edge.

The invention will now be further described, by way of example, with reference to the accompanying drawings, in which:
Figure 1 shows part of a car body incorporating a weatherstrip in accordance with the invention; and
Figure 2 is a cross-section through the weatherstrip.

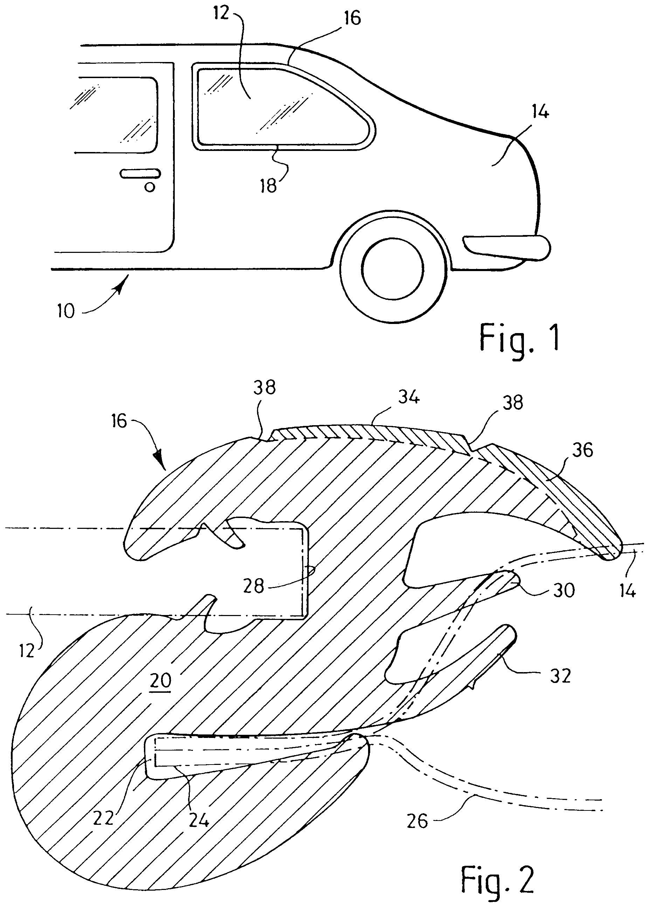

Figure 1 shows a car 10 with a fixed rear window pane 12 supported in the vehicle bodywork 14 by a weatherstrip 16 which completely surrounds the pane and which is joined to itself at 18. The weatherstrip is connected at one side to the pane and at the other side to the bodywork 14 so as to form a weathertight seal.

The weatherstrip is manufactured by an extrusion process which produces a long length of continuous material of constant cross-section. It will be seen from Figure 1 that the weatherstrip has to be sufficiently flexible to bend around the corners of the pane whilst retaining its sealing capabilities. A consequence of this bending of the strip is that the edge of the strip which seals with the glass will be in compression whilst the edge of the strip which seals with the metal bodywork will be in tension.

Figure 2 shows the weatherstrip on a much larger scale, and in cross-section. The weatherstrip has a main body 20 formed of natural rubber, and this body forms a socket 22 which receives a body flange 24.

The body 20 also has a groove 26 for receiving a glass pane 12.

In Figure 2 the cross-section of the weatherstrip 16 is shown in its relaxed state, ie before it is fitted on to the body panel 14 or onto the glass pane 12. The approximate dimensions and positions of the body panel 14 and the glass pane 12 are indicated in chain-dotted lines and it will be clear to the skilled man that the adjacent edges of the grooves 22, 28 and of the lips 30, 32 will deflect when the weatherstrip is in position, to form seals against the respective components.

To protect the natural rubber body 20 against the damaging effects of ozone and other constituents of the atmosphere, the outer surface 34 of the weatherstrip 16 is formed by a layer 36 of EPDM. In the outer skin 34, two feature lines 38 are shown; these feature lines are decorative only.

It will be seen from Figure 2 that the EPDM skin 36 extends right up to the sheet metal body panel 14, and this edge of the weatherstrip will form the outer edge when the weatherstrip is installed. It is this edge which will then be in tension around the curved corners of the window pane.

The other edge of the skin 34 is not covered by an EPDM skin in the embodiment shown in the drawings, although other embodiments are possible where the other edge is so covered. This edge, which will be compressed in use, remains as exposed natural rubber but will be unlikely to deteriorate and leak because of the fact that it is in compression.

The body 20 and the skin 36 are preferably formed by a co-extrusion process. The extrusion conditions can be suitably determined in order to ensure that cohesion between the skin and the body is obtained. Although conventional teaching relating to the co-extrusion of natural rubber and EPDM would indicate that a successful co-extrusion would not result, we have found that by varying and optimising the extrusion parameters, a satisfactory bond between the two materials can be obtained.

## Claims

1. A weatherstrip (16) for sealing a glass panel (12) to the bodywork (14) of a motor vehicle (10), the weatherstrip being of uniform cross-sectional form over its length characterised in that the weatherstrip is made partly of natural rubber (20) and partly of a flexible synthetic material (36) which is resistant to ozone cracking, the weatherstrip having features formed in the natural rubber region thereof for making a seal with the pane and with the bodywork, and having the synthetic material forming a cover over the natural rubber where the weatherstrip is, in use, exposed to the atmosphere.

2. A weatherstrip as claimed in Claim 1, wherein the flexible synthetic material (36) which is resistant to ozone cracking is preferably EPDM.

3. A weatherstrip as claimed in Claim 1 or Claim 2, wherein the natural rubber (20) and the synthetic material (36) are co-extruded to form the weatherstrip, with the weatherstrip being predominantly formed from natural rubber with a coating of the synthetic material on one surface.

4. A weatherstrip as claimed in Claim 3, wherein the synthetic material (36) forms a cover for the natural rubber and the cover extends right to that edge of the weatherstrip (16) which is adapted to seal against the motor vehicle bodywork (14).

5. A weatherstrip as claimed in Claim 4, wherein at the opposite edge of the strip, which seals against the glass, the cover (36) stops some distance before the edge of the strip (16).
